# EUROPÄISCHE PATENTSCHRIFT

(11) **EP 2 495 137 B1**
(45) Veröffentlichungstag und Bekanntmachung des Hinweises auf die Patenterteilung: **09.04.2014**
(21) Anmeldenummer: 12150851.9
(22) Anmeldetag: 12.01.2012
(51) Int. Cl.: B60R 21/217

(54) **Durchbrochenes Airbaggehäuse mit Bahneinlage**
Perforated airbag housing with sheet insert
Boîtier d'airbag perforé et doté d'une insertion de bande

(30) Priorität: 04.03.2011 DE 102011005082
(43) Veröffentlichungstag der Anmeldung: 05.09.2012
(73) Patentinhaber: ZF Friedrichshafen AG, 88038 Friedrichshafen (DE)
(72) Erfinder: Wagener, Keit, 49143 Bissendorf (DE); Imken, Hans-Juergen, 49163 Bohmte (DE); Rick, Ulrich, 55595 Braunweiler (DE)

(56) Entgegenhaltungen:
- EP-A2- 0 769 425
- WO-A2-2007/115519
- DE-A1- 10 148 829
- DE-A1-102005 004 451
- DE-A1-102005 010 324
- DE-A1-102009 038 442
- GB-A- 2 346 847

## Beschreibung

Die Erfindung betrifft ein Gehäuse für einen aufblasbaren Airbag in einem Kraftfahrzeug, gemäß dem Oberbegriff des Patentanspruchs 1, siehe DE 10 2009 038442 A1 oder GB 2 346 847 A.

Leergewichte von Kraftfahrzeugen haben in den vergangenen Jahren zugenommen. Die Ursachen hierfür liegen einerseits in den zunehmenden Kraftfahrzeug-Basisausstattungen, womit hauptsächlich den Komfortansprüchen der Käufer entsprochen wird. Zum anderen haben die gestiegenen Anforderungen an das dynamische Fahrverhalten zu leistungsstärkeren Motoren, Bremsen und Servolenkungen sowie zu Zusatzfunktionen wie ABS, ESP usw. geführt, die ebenfalls zur Erhöhung der Kraftfahrzeugmasse beitragen. Darüber hinaus wurden aufgrund des steigenden Sicherheitsbewusstseins diverse Sicherheitseinrichtungen entwickelt, die mittlerweile zur Serienausstattung von vielen Kraftfahrzeugen gehören.

In diesem Zusammenhang ist auch die zunehmende Zahl der Airbags zu nennen, die - insbesondere aufgrund der für einen Airbag jeweils notwendigen Gehäusestruktur - einen nicht unerheblichen Einfluss auf das Leergewicht des Kraftfahrzeuges haben.

Gehäuse für Kraftfahrzeugairbags bestehen im Allgemeinen aus einem Behälter, in dem ein Gasgenerator sowie ein gefalteter Luftsack enthalten sind. Gattungsgemäße Airbag-Gehäuse sind häufig aus Metall, insbesondere aus umgeformten Blechteilen, oder aus stranggepresstem Leichtmetall hergestellt. Auch sind Airbaggehäuse aus Leichtmetalldruckguss oder Kunststoffspritzguss bekannt.

Bedingt durch die jeweiligen Fertigungsverfahren weisen alle derartigen bekannten Gehäuse - selbst in den bisherigen Leichtbauausführungen - auch in den nur gering belasteten Gehäusebereichen grundsätzlich Mindestwandstärken auf, die zu entsprechenden Bauteilgewichten führen.

Im Stand der Technik, dokumentiert beispielsweise durch die DE 10 2005 004 451 A1, ist versucht worden, dieser Problematik dahingehend zu begegnen, dass Airbaggehäuse mit Durchbrüchen bzw. mit gitterartig gestalteten Gehäusebereichen ausgeführt worden sind, wodurch somit Material und Gewicht im Bereich der Durchbrüche bzw. im Bereich der Gitteraussparungen eingespart wurde. Dieses Prinzip stößt jedoch an Grenzen insofern, als auf diese Weise Stabilität insbesondere in Querrichtung zu derartigen Durchbrüchen, bzw. innerhalb der Ebene des dergestalt gitterartig gestalteten Gehäusebereichs verloren geht.

Aus diesem Grund müssen Gehäusebereich mit Durchbrüchen bzw. gitterartig gestaltete Gehäusebereiche zum Ausgleich der mit den jeweiligen Durchbrüchen entfallenen Materialstabilität wiederum häufig mit Verstärkungsrippen versehen oder generell mit einer größeren Wandstärke ausgeführt werden. Hierdurch wird nicht nur zusätzlicher Bauraum senkrecht zur Gehäuseoberfläche beansprucht, sondern es wird damit auch die Effektivität der Durchbrüche oder der gitterartig ausgeführten Gehäusebereiche in Bezug auf die erwünschte Material- und Gewichtseinsparung beschränkt. Schließlich ist die Anzahl bzw. Größe der Durchbrüche auch dahingehend begrenzt, dass ein unbeabsichtigtes bzw. unkontrolliertes Durchdrücken von Bereichen des Airbags durch derartige Gehäusedurchbrüche - sowohl im gepackten Zustand des Luftsacks als auch nach der Zündung und während des Aufblasens des Airbags - unterbunden werden muss.

Dies gilt unabhängig davon, ob das Airbaggehäuse separate Generator- und Luftsackkammern aufweist, oder ob der Gasgenerator und der gefaltete Luftsack im Wesentlichen in ein und demselben Gehäusebereich des Airbaggehäuses angeordnet sind. Letzteres kann der Fall sein beispielsweise in Form eines den Gasgenerator im Wesentlichen unmittelbar umgebenden, gefalteten Luftsacks, wobei der Gasgenerator und der gefaltete Luftsack gemeinsam in einem Innenraum des Airbaggehäuses angeordnet sind. Auch sind Airbaggehäuse mit außenliegend am Gehäuse angeordneten Gasgeneratoren bekannt, die dementsprechend eine Luftsackkammer zur Aufnahme des gefalteten Luftsacks aufweisen.

Mit diesem Hintergrund ist es somit zweckmäßig, ein Airbaggehäuse zu schaffen, mit dem die genannten, im Stand der Technik vorhandenen Nachteile bzw. Einschränkungen überwunden werden. Es sollen dabei insbesondere kostengünstig herstellbare Airbaggehäuse geschaffen werden, die mit wenigen Bauteilen und geringer Masse ausgeführt werden können, und die somit das Leergewicht eines Kraftfahrzeuges, in welches sie eingebaut werden, nur unwesentlich erhöhen.

Dies wird durch ein Airbaggehäuse nach DE 10 2009 038 442 A1 oder GB 2 346 847 A erreicht:

Der zumindest eine Gehäusedurchbruch, bzw. die Durchbrüche des gitterartig ausgeführten Gehäusebereichs sind durch zumindest eine biegeschlaffe und zugsteife flächige Bahneinlage verschlossen sind. Dabei ist die Bahneinlage mit den Rändern des Gehäusedurchbruchs bzw. mit den Rändern der Durchbrüche des gitterartig durchbrochenen Gehäusebereichs kraftübertragend verbunden.

Auf diese Weise wird Materialersparnis und geringes Gewicht erzielt, ohne deren Nachteile geringere Stabilität der durchbrochenen Bereiche insbesondere hinsichtlich Zugspannungen, größere notwendige Wandstärken bzw. Randverstärkungen, Gefahr des Durchtritts des Airbags durch die Durchbrüche aufzuweisen.

Insbesondere kann die erfindungsgemäß eingesetzte biegeschlaffe Bahneinlage sehr dünn und damit gewichtssparend ausgebildet werden, da von ihr lediglich Zugbelastungen übertragen werden müssen, während Biege-und Drucklasten von den die Bahneinlage umgebenden Gehäusebereichen aufgenommen werden. Auf diese Weise ergibt sich eine optimale Funktionsteilung und gegenseitige Stützung zwischen den Gehäusebereichen und der biegeschlaffen Bahneinlage, indem durch die Gehäusebereiche bzw. durch die Bahneinlage jeweils spezifisch diejenigen Kräfte aufgenommen und übertragen werden können, die deren jeweiliger Geometrie bzw. deren jeweiligen Materialeigenschaften entsprechen. Eine hohe Steifigkeit der Gehäusestruktur eines Airbaggehäuses läßt sich erreichen, wenn wesentliche Bereiche der Gehäuseoberfläche in Form von Durchbrüchen gebildet sind.

Gemäß der Erfindung ist die Bahneinlage bereits bei der Urformung des Airbaggehäuses - im Bereich der Ränder des Gehäusedurchbruchs bzw. im Bereich der Ränder der Durchbrüche des gitterartig durchbrochenen Gehäusebereichs - durch Hinterspritzung bzw. Umspritzung mit dem Gehäusematerial verbunden. Auf diese Weise ergibt sich eine besonders feste form- und stoffschlüssige Verbindung zwischen der Bahneinlage und den jeweiligen Rändern der Gehäusedurchbrüche bzw. der gitterartig ausgeführten Gehäusebereiche. Hinterspritzung bedeutet in diesem Fall, dass die Ränder der Bahneinlage lediglich auf einer Oberflächenseite der Bahneinlage in Kontakt mit dem Werkstoff des Airbaggehäuses stehen und verbunden sind, während Umspritzung bedeutet, dass die Ränder der Bahneinlage auf beiden Oberflächenseiten in dem Werkstoff des Airbaggehäuses eingebettet sind, weshalb insbesondere die Umspritzung der Bahneinlage eine besonders feste Verbindung zwischen der Bahneinlage und den Rändern des Gehäuses ermöglicht.

Die Erfindung wird ferner unabhängig davon verwirklicht, aus welchem Material und welcher Materialausführung die Bahneinlage besteht, sofern die Anforderungen bezüglich geringer Dicke, geringer Masse und Zugsteifigkeit erfüllt sind. Gemäß besonders bevorzugter Ausführungsformen der Erfindung ist die Bahneinlage aus einem Fasergewebe, einem Faservlies oder aus einer Folie gebildet. Auf diese Weise lässt sich ein minimal niedriges Gewicht bei gleichzeitig hoher Zugbelastbarkeit der mit der Bahneinlage verschlossenen bzw. verstärkten Gehäusedurchbrüche erzielen.

Bevorzugte Ausführungsformen sind Gegenstand der Unteransprüche. Die erfindungsgemäße Verwendung wird mit Anspruch 5 beschrieben.

Im Folgenden wird die Erfindung anhand lediglich Ausführungsbeispiele darstellender Zeichnungen näher erläutert. Dabei zeigt:
- Fig. 1: in isometrischer Darstellung ein durchbrochenes Airbaggehäuse mit Bahneinlage gemäß der Erfindung in schräger Draufsicht; und
- Fig. 2: in einer Fig. 1 entsprechenden Darstellung das Airbaggehäuse gemäß Fig. 1 in einer schrägen Vorderansicht.

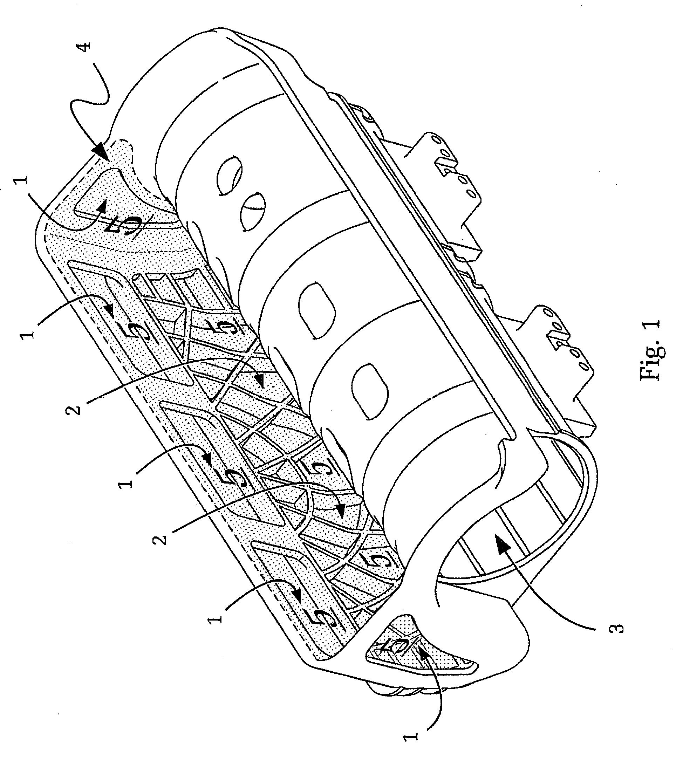

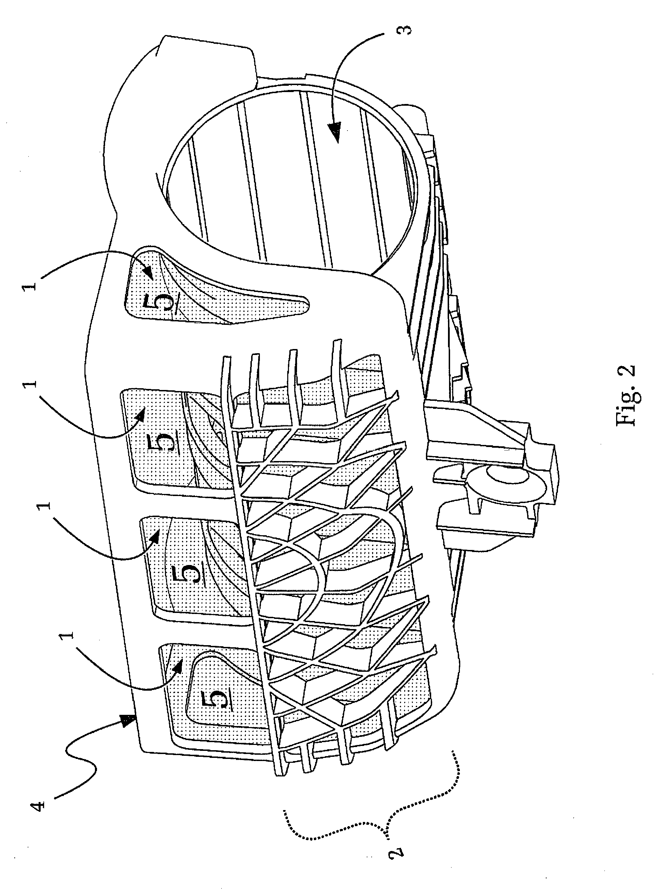

Die Fig. 1 bzw. 2 zeigen ein Airbaggehäuse mit Gehäusedurchbrüchen 1 sowie mit einem gitterartig durchbrochenen Gehäuseoberflächenbereich 2. Das Airbaggehäuse gemäß dem dargestellten Ausführungsbeispiel umfasst eine Generatorkammer 3, in der ein (nicht dargestellter) Gasgenerator aufnehmbar ist, sowie eine Luftsackkammer 4, wobei in der Luftsackkammer 4 ein in den Figuren ebenfalls nicht dargestellter, gefalteter und aufblasbarer Luftsack aufnehmbar ist.

Man erkennt, dass das Airbaggehäuse im Bereich der Aufnahme für den gefalteten Luftsack eine Reihe von Gehäusedurchbrüchen 1 sowie einen gitterartig ausgebildeten Gehäuseoberflächenbereich 2 mit weiteren Durchbrüchen aufweist. Dank der Durchbrüche 1 sowie des ebenfalls durchbrochenen gitterartigen Gehäuseoberflächenbereichs 2 weist das Airbaggehäuse eine besonders geringe Masse auf und erhöht damit das Leergewicht eines Kraftfahrzeuges, in welches eines oder mehrere erfindungsgemäß ausgebildete Airbaggehäuse eingebaut werden, in nur geringem Maße.

Für sich genommen würden die Durchbrüche 1 bzw. der gitterartig durchbrochene Gehäuseoberflächenbereich 2 zu Schwächungen der Steifigkeit des Airbaggehäuses führen. Zudem könnte der (nicht dargestellte) in der Luftsackkammer 4 angeordnete Luftsack - insbesondere beim Auslösen des Airbags aufgrund der Expansion der Treibgase des Gasgenerators - in unerwünschter Weise in die Durchbrüche in den Gehäusebereichen 1 bzw. 2 eindringen, oder sich in den durchbrochenen Gehäusebereichen verhaken.

Beides wird dank der Erfindung überwunden dadurch, dass sowohl die Gehäusedurchbrüche 1 als auch die Durchbrüche des gitterartigen Gehäuseoberflächenbereichs 2 durch eine biegeschlaffe, jedoch zugsteife Bahneinlage 5 verschlossen sind. In den Figuren ist die Bahneinlage 5 jeweils durch Punktierung bzw. strichlierte Ränder angedeutet. Dabei ist die Bahneinlage mit den Rändern der Gehäusedurchbrüche 1 bzw. mit den Rändern oder Stegen des gitterartigen Gehäuseoberflächenbereichs 2 jeweils kraftübertragend durch Hinterspritzung verbunden.

Bei der Bahneinlage 5 kann es sich dabei insbesondere um eine zugfeste Folie, um ein Fasergewebe oder um ein Faservlies handeln.

Aufgrund der zugsteifen Bahneinlage 5, die jeweils mit den Rändern der Durchbrüche in den Bereichen 1 bzw. 2 verbunden ist, wird somit einerseits ein ungewolltes Austreten oder Verhaken des Luftsacks mit den Gehäusedurchbrüchen - sowohl im noch gefalteten Zustand als auch nach einer Auslösung des Airbags - verhindert, und die Schwächung der Struktur des Airbaggehäuses aufgrund der Durchbrüche in den Bereichen 1 bzw. 2 wird durch die zugsteife, mit den Rändern der Durchbrüche 1, 2 kraftübertragend verbundene Bahneinlage 5 kompensiert.

Die erfindungsgemäß eingesetzte biegeschlaffe Bahneinlage kann insbesondere sehr dünn und damit gewichtssparend ausgebildet werden, da von ihr lediglich Zugbelastungen übertragen werden müssen, während auftretende Biege- und Drucklasten von den die Bahneinlage umgebenden Gehäusebereichen aufgenommen werden. Auf diese Weise ergibt sich eine vorteilhafte Funktionsteilung und gegenseitige Verstärkung hinsichtlich der massiven Gehäusebereiche und der biegeschlaffen Bahneinlage, indem Gehäusebereiche bzw. Bahneinlage jeweils spezifisch diejenigen Kräfte aufnehmen und übertragen, die der jeweiligen Geometrie, den jeweiligen Querschnitten bzw. den jeweiligen Materialeigenschaften optimal entsprechen. Insgesamt lässt sich auf diese Weise ein auch großflächig durchbrochen ausgeführtes Airbaggehäuse gleichzeitig mit hoher Gehäusesteifigkeit ausführen.

Im Ergebnis wird somit deutlich, dass mit der Erfindung ein Airbaggehäuse geschaffen wird, das kostengünstig herstellbar ist und eine minimale Anzahl an Bauteilen sowie eine sehr geringe Masse aufweist, wobei gleichzeitig hohe Anforderungen an die Betriebssicherheit und Steifigkeit des Airbaggehäuses erfüllt werden. Mit der Erfindung wird der Vorteil von durchbrochenen bzw. gitterartig offen gestalteten Gehäusebereichen von Airbaggehäusen, nämlich Materialersparnis und geringes Gewicht erzielt, ohne entsprechende Nachteile, nämlich geringere Stabilität - insbesondere hinsichtlich Zug- und Scherspannungen - der durchbrochenen Bereiche, eine ansonsten notwendige Vergrößerung der Wandstärken, bzw. die Gefahr des Eintritts oder Durchtritts des Airbags durch die Gehäusedurchbrüche, aufzuweisen.

### Bezugszeichenliste

- 1: Gehäusedurchbruch
- 2: gitterartig durchbrochener Gehäusebereich
- 3: Generatorkammer
- 4: Luftsackkammer
- 5: Bahneinlage

## Patentansprüche

1. Airbaggehäuse, in dem ein gefalteter, aufblasbarer Luftsack aufnehmbar ist, wobei das Airbaggehäuse im Bereich der Luftsackaufnahme zumindest einen Gehäusedurchbruch (1) und/oder einen gitterartig durchbrochenen Gehäuseoberflächenbereich (2) aufweist, wobei der zumindest eine Gehäusedurchbruch (1) bzw. die Durchbrüche des gitterartig durchbrochenen Gehäusebereichs (2) durch zumindest eine biegeschlaffe und zugsteife Bahneinlage (5) verschlossen sind, wobei die Bahneinlage (5) mit den Rändern des Gehäusedurchbruchs (1) bzw. mit den Rändern der Durchbrüche des gitterartig durchbrochenen Gehäusebereichs kraftübertragend verbunden ist, **dadurch gekennzeichnet, dass** die Bahneinlage (5) bei der Urformung des Gehäuses im Bereich der Ränder des Gehäusedurchbruchs (1) bzw. im Bereich der Ränder der Durchbrüche des gitterartig durchbrochenen Gehäusebereichs (2) durch Hinterspritzung bzw. Umspritzung mit dem Gehäusematerial verbunden ist.

2. Airbaggehäuse nach Anspruch 1, **dadurch gekennzeichnet, dass** die Bahneinlage (5) aus einem Fasergewebe gebildet ist.

3. Airbaggehäuse nach Anspruch 1 oder 2, **dadurch gekennzeichnet, dass** die Bahneinlage (5) aus einem Faservlies gebildet ist.

4. Airbaggehäuse nach einem der Ansprüche 1 bis 3, **dadurch gekennzeichnet, dass** die Bahneinlage (5) aus einer Folie gebildet ist.

5. Verwendung zumindest einer biegeschlaffen und zugsteifen Bahneinlage (5) für ein Airbaggehäuse, in dem ein gefalteter, aufblasbarer Luftsack aufnehmbar ist, wobei das Airbaggehäuse im Bereich der Luftsackaufnahme zumindest einen Gehäusedurchbruch (1) und/oder einen gitterartig durchbrochenen Gehäuseoberflächenbereich (2) aufweist, wobei der zumindest eine Gehäusedurchbruch (1) bzw. die Durchbrüche des gitterartig durchbrochenen Gehäusebereichs (2) durch die zumindest eine biegeschlaffe und zugsteife Bahneinlage (5) verschlossen sind, wobei die Bahneinlage (5) mit den Rändern des Gehäusedurchbruchs (1) bzw. mit den Rändern der Durchbrüche des gitterartig durchbrochenen Gehäusebereichs kraftübertragend verbund.en ist, **dadurch gekennzeichnet, dass** die Bahneinlage (5) bei der Urformung des Gehäuses im Bereich der Ränder des Gehäusedurchbruchs (1) bzw. im Bereich der Ränder der Durchbrüche des gitterartig durchbrochenen Gehäusebereichs (2) durch Hinterspritzung bzw. Umspritzung mit dem Gehäusematerial verbunden wird.

## Claims

1. Airbag housing in which a folded, inflatable air bag can be accommodated, wherein the airbag housing has in the region of the air-bag receptacle at least one housing breakthrough (1) and/or a housing surface region (2) broken through in the manner of a grid, wherein the at least one housing breakthrough (1) or the breakthroughs of the housing region (2) broken through in the manner of a grid is/are covered by at least one flexurally limp and tensionally rigid sheet insert (5), wherein the sheet insert (5) is connected in a force-transferring manner to the peripheries of the housing breakthrough (1) or to the peripheries of the breakthroughs of the housing region broken through in the manner of a grid, **characterized in that** the sheet insert (5) is connected to the material of the housing in the region of the peripheries of the housing breakthrough (1) or in the region of the peripheries of the breakthroughs of the housing region (2) broken through in a gridlike manner by in-mould lamination or encapsulation during the original forming of the housing.

2. Airbag housing according to Claim 1, **characterized in that** the sheet insert (5) is formed from a woven fabric.

3. Airbag housing according to Claim 1 or 2, **characterized in that** the sheet insert (5) is formed from a nonwoven fabric.

4. Airbag housing according to one of Claims 1 to 3, **characterized in that** the sheet insert (5) is formed from a film.

5. Use of at least one flexurally limp and tensionally rigid sheet insert (5) for an airbag housing, in which a folded, inflatable air bag can be accommodated, wherein the airbag housing has in the region of the air-bag receptacle at least one housing breakthrough (1) and/or a housing surface region (2) broken through in the manner of a grid, wherein the at least one housing breakthrough (1) or the breakthroughs of the housing region (2) broken through in the manner of a grid is/are covered by the at least one flexurally limp and tensionally rigid sheet insert (5), wherein the sheet insert (5) is connected in a force-transferring manner to the peripheries of the housing breakthrough (1) or to the peripheries of the breakthroughs of the housing region broken through in the manner of a grid, **characterized in that** the sheet insert (5) is connected to the material of the housing in the region of the peripheries of the housing breakthrough (1) or in the region of the peripheries of the breakthroughs of the housing region (2) broken through in a gridlike manner by in-mould lamination or encapsulation during the original forming of the housing.

## Revendications

1. Boîtier d'airbag, dans lequel peut être reçu un sac d'air gonflable plié, le boîtier d'airbag présentant, dans la région du logement de sac d'air, au moins un orifice de boîtier (1) et/ou une région de surface de boîtier (2) perforée à la manière d'une grille, l'au moins un orifice de boîtier (1) ou les orifices de la région de boîtier (2) perforée à la manière d'une grille étant fermés par au moins un insert en bande (5) rigide en traction et souple en flexion, l'insert en bande (5) étant connecté aux bords de l'orifice de boîtier (1) ou aux bords des orifices de la région de boîtier perforée à la manière d'une grille par transfert de force, **caractérisé en ce que** l'insert en bande (5), lors du formage initial du boîtier dans la région des bords de l'orifice de boîtier (1) ou dans la région des bords des orifices de la région de boîtier (2) perforée à la manière d'une grille, est connecté au matériau du boîtier par pulvérisation par l'arrière ou surmoulage.

2. Boîtier d'airbag selon la revendication 1, **caractérisé en ce que** l'insert en bande (5) est formé par un tissu fibreux.

3. Boîtier d'airbag selon la revendication 1 ou 2, **caractérisé en ce que** l'insert en bande (5) est formé par un non-tissé fibreux.

4. Boîtier d'airbag selon l'une quelconque des revendications 1 à 3, **caractérisé en ce que** l'insert en bande (5) est formé par une feuille.

5. Utilisation d'au moins un insert en bande (5) rigide en traction et souple en flexion pour un boîtier d'airbag, dans lequel peut être reçu un sac d'air gonflable plié, le boîtier d'airbag présentant, dans la région du logement de sac d'air, au moins un orifice de boîtier (1) et/ou une région de surface de boîtier (2) perforée à la manière d'une grille, l'au moins un orifice de boîtier (1) ou les orifices de la région de boîtier (2) perforée à la manière d'une grille étant fermés par l'au moins un insert en bande (5) rigide en traction et souple en flexion, l'insert en bande (5) étant connecté aux bords de l'orifice de boîtier (1) ou aux bords des orifices de la région de boîtier perforée à la manière d'une grille par transfert de force, **caractérisée en ce que** l'insert en bande (5), lors du formage initial du boîtier dans la région des bords de l'orifice de boîtier (1) ou dans la région des bords des orifices de la région de boîtier (2) perforée à la manière d'une grille, est connecté au matériau du boîtier par pulvérisation par l'arrière ou surmoulage.
